# FASCICULE DE BREVET EUROPEEN

(11) **EP 4 556 939 B1**
(45) Date de publication et mention de la délivrance du brevet: **09.09.2026**
(21) Numéro de dépôt: 24214073.9
(22) Date de dépôt: 20.11.2024
(51) Int. Cl.: G01S 7/02, G01S 7/41, G01S 13/02

(54) **SYSTÈME RADAR AMÉLIORÉ ; PROCÉDÉ DE CONFIGURATION ET PRODUITS PROGRAMME D'ORDINATEUR ASSOCIÉS**
VERBESSERTES RADARSYSTEM, KONFIGURATIONSVERFAHREN UND COMPUTERPROGRAMMPRODUKTE DAFÜR
IMPROVED RADAR SYSTEM; METHOD OF CONFIGURING AND COMPUTER PROGRAM PRODUCTS THEREOF

(30) Priorité: 20.11.2023 FR 2312709
(43) Date de publication de la demande: 21.05.2025
(73) Titulaire: THALES, 92190 Meudon (FR)
(72) Inventeur: MAZEAU, Thierry, 33700 MERIGNAC (FR); NICOLAS, Florian, 29200 BREST (FR)
(74) Mandataire: Lavoix

(56) Documents cités:
- EP-A1- 3 674 741
- EP-B1- 2 686 699
- FR-A1- 3 058 577
- SCHOLL STEFAN ET AL: "End-to-End Recognition of Interleaved Radar Emitters from the Spectrogram", 2023 20TH EUROPEAN RADAR CONFERENCE (EURAD), EUROPEAN MICROWAVE ASSOCIATION (EUMA), 20 September 2023 (2023-09-20), pages 286 - 289, XP034454534, DOI: 10.23919/EURAD58043.2023.10289566

## Description

L'invention a pour domaine technique celui de la guerre électronique et, plus particulièrement, celui de l'identification de sources radiofréquences - RF présentes dans l'environnement.

Un système de guerre électronique - GE est un système dédié d'identification automatique d'une source RF à partir de sa signature électromagnétique.

On connait des systèmes de GE adaptés pour, à partir d'ondes électromagnétiques collectées par différents capteurs, détecter une source, pister cette source au cours du temps, et, à partir d'une piste, identifier le type dont relève la source correspondante.

Par exemple, les documents FR 3 058 577 A1 et EP 2 686 699 B1 présentent des systèmes radar pouvant être adaptés pour la guerre électronique.

Pour l'identification, le système de GE s'appuie sur une bibliothèque de référence répertoriant différents types de source, et pour chaque type de source, ses attributs caractéristiques.

L'article de Stephan SCHOLL et al., "End-to-End Recognition of Interleaved Radar Emitters from the Spectrogram", 2023 20th EUROPEAN RADAR CONFERENCE (EURAD), EUROPEAN MICROWAVE ASSOCIATION (EUMA), 20 septembre 2023, pages 286-289, ou encore le document EP 3 674 741 A1 présentent l'usage d'une telle bibliothèque de référence.

L'identification consiste par exemple à fournir une liste de candidats, un candidat étant un type de source que l'on peut associer à la source détectée avec une certaine probabilité.

Une fois une identification faite, le système de GE, commande par exemple un brouilleur ou encore un système radar, notamment afin d'obtenir des informations complémentaires sur la source RF identifiée.

Par exemple, un système de GE ne donne souvent que l'azimut de la source RF. Le système radar va alors permettre de localiser cette source en en donnant l'élévation et surtout la distance.

Cependant, cette architecture combinant un système de GE et un système radar manque de robustesse. En particulier, lorsque le système de GE est défaillant, toute identification de source est rendue impossible.

Le but de l'invention est de répondre à ce besoin.

Pour cela l'invention a pour objet un procédé de configuration et d'utilisation d'un algorithme d'identification et un programme d'ordinateur selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
La figure 1 est une représentation schématique d'un mode de réalisation d'un système radar présentant une fonctionnalité de guerre électronique ;
La figure 2 est une représentation schématique d'un système de configuration pour la mise en œuvre du procédé de configuration du système radar de la figure 1 ; et,
La figure 3 est une représentation sous forme de blocs du procédé de configuration selon l'invention.

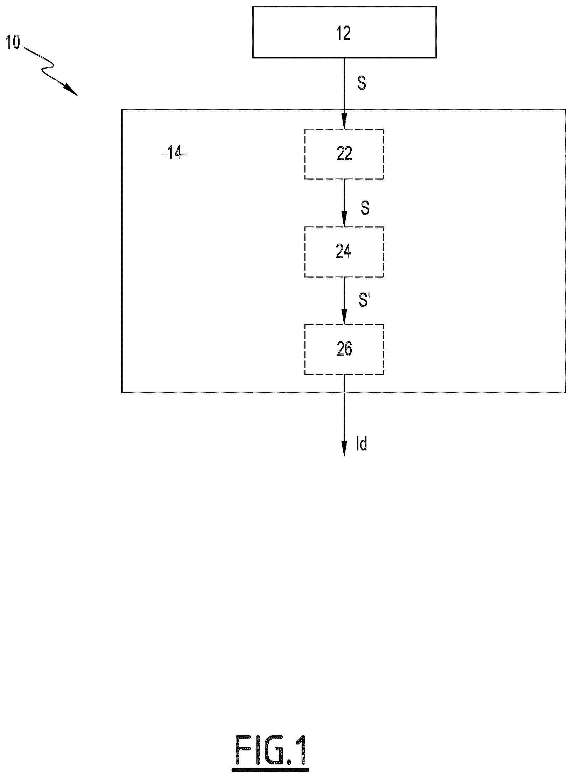

La figure 1 représente schématiquement un mode de réalisation préféré d'un système radar.

Le système de radar 10 associe un radar 12 (c'est-à-dire une antenne, une électronique d'émission et une électronique de réception) à un calculateur 14.

Le radar 12 est adapté pour délivrer un signal brut s.

Le radar 12 est par exemple un radar impulsionnel. À chaque récurrence, le radar 12 émet, pendant une durée d'émission (ou temps d'éclairement), une onde électromagnétique, puis reçoit, pendant une durée de réception, une onde reçue résultant de la réflexion de l'onde émise sur des objets réfléchissants présents dans le domaine d'observation du radar.

Le calculateur 14 est programmé de manière à munir le système radar 10 de différentes fonctionnalités, dont, notamment, une fonctionnalité de GE d'identification de sources RF présentes dans l'environnement.

Pour cela, selon la représentation fonctionnelle de la figure 1, le système radar 10 comporte un module 22 de prétraitement du signal brut s pour obtenir une succession de spectres S, un module 24 de normalisation d'un spectre S pour obtenir un spectre normalisé S', et un module 26 d'identification de source RF à partir d'un spectre normalisé S' de manière à délivrer un identifiant Id.

Le module de prétraitement 22 permet d'appliquer un ou plusieurs prétraitements, conformes à l'état de la technique, au signal brut s en sortie de l'électronique de réception du radar 12, pour obtenir une pluralité de spectres radar.

Plus précisément, le signal brut est un signal échantillonné temporellement au rythme des codeurs analogiques/numériques de l'électronique d'acquisition du radar. Ces échantillons sont « classés » (dimension en distance) en fonction de leurs retards par rapport au début de chaque récurrence (dimension en récurrence).

Le signal brut est ainsi échantillonné temporellement à la fois selon un temps court, correspondant à la dimension en distance d, et selon un temps long, correspondant à la dimension en récurrence rec.

Cette étape d'échantillonnage permet d'obtenir des échantillons distance-récurrence E(d, rec) du signal brut.

Un traitement est ensuite appliqué consistant à réaliser une transformée de Fourier rapide FFT selon la dimension en récurrence, de manière à répartir le spectre sur des canaux fréquentiels. Des échantillons distance-fréquence E(d, f) sont ainsi obtenus à partir des échantillons distance-récurrence E(d, rec).

Un échantillon E(d, f) est obtenu en effectuant une FFT sur un bloc de N' échantillons E(d, rec) successifs selon la dimension en récurrence pour la distance d considérée. N' est par exemple choisi égal à 1024.

Des cases fréquence de résolution *r_{f}.* sont juxtaposées selon la dimension en fréquence. L'intervalle en fréquence est subdivisé en N cases en fréquence, avec par exemple N égal à 1024.

La résolution fréquentielle *r_{f}* dépend de la durée d'un bloc : T_{B} = N'.Tr, avec Tr la durée d'une récurrence : ${r}_{f} = \frac{1}{{T}_{B}}$

Ces échantillons E(d, f) peuvent être représentés sous forme matricielle, par une matrice distance-vitesse présentant H lignes selon la dimension en fréquence et W colonnes selon la dimension en distance, chaque pixel correspondant à une information d'amplitude.

Alternativement, les échantillons E(d, f) peuvent être représentés comme une successions de spectres radar S selon la direction en distance d. Un spectre radar est donc un spectre fréquence-amplitude.

Le module de normalisation 24, qui est optionnel, permet avantageusement de normaliser un spectre radar S de manière à obtenir un spectre normalisé S'. Notamment, la distance d est prise en compte pour normaliser en amplitude le spectre. Un exemple de normalisation est donné en fin de description. D'autres informations complémentaires peuvent être prise en compte, comme la hauteur de l'aéronef porteur, l'élévation de l'antenne (ou « tilt » en anglais) du système radar, la vitesse du porteur, etc.

Le module d'identification 26 permet d'associer à un spectre radar, brut S mais de préférence normalisé S', un identifiant Id correspondant au type de source RF dont relève la source RF qu'il est possible d'associer à l'objet observé par le radar 12 dans le spectre considéré. L'identifiant peut consister en une liste de candidats, chaque candidat étant un type de source que l'on peut associer à la source détectée avec une certaine probabilité.

Ainsi, avec l'invention, le système radar 10 présente une fonctionnalité supplémentaire d'identification de source RF à partir de l'acquisition d'un spectre radar.

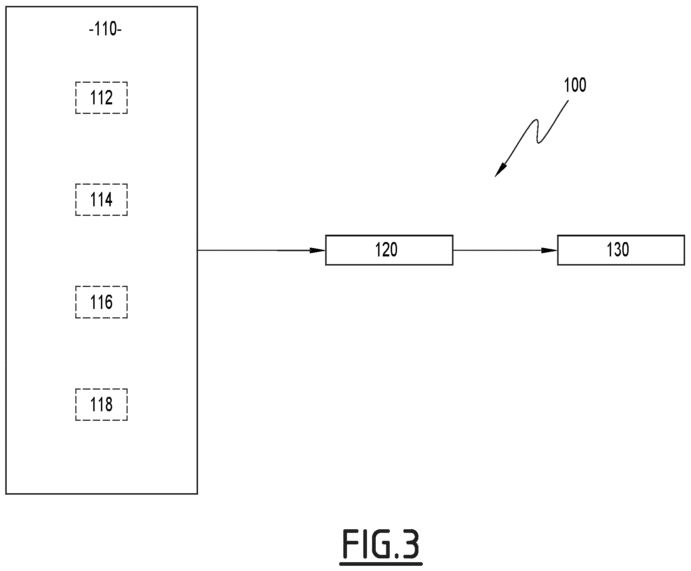

Dans un mode de réalisation préféré, le module 26 est un algorithme d'intelligence artificielle - AI. Celui-ci est convenablement paramétré par la mise en œuvre d'un procédé de configuration, comme le procédé 100 de la figure 3.

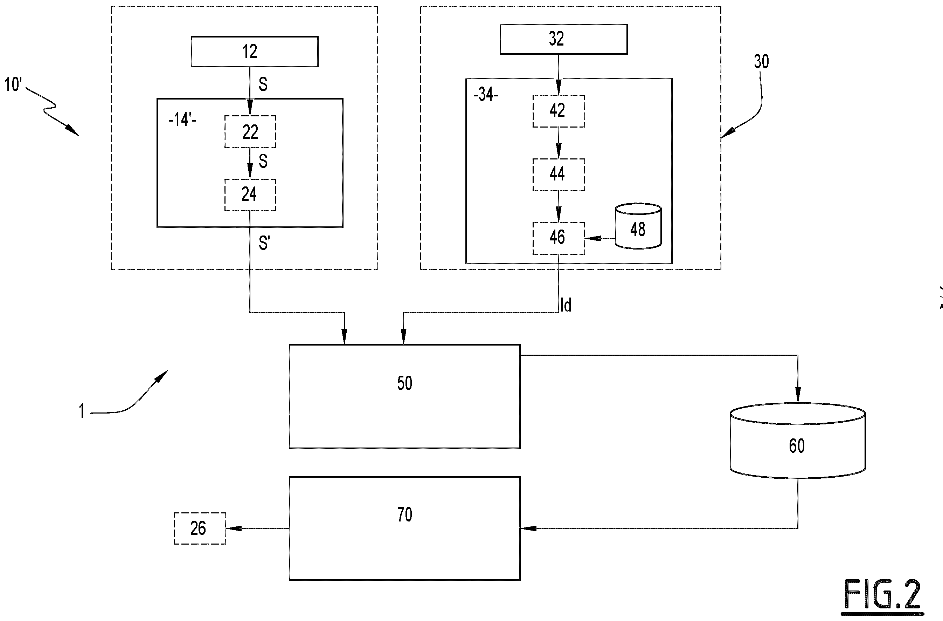

La mise en œuvre du procédé de configuration s'appuie sur un système de configuration, comme par exemple celui représenté à la figure 2.

Le système 1 est avantageusement embarqué à bord d'un aéronef pour effectuer des campagnes de mesures en vol permettant de peupler dynamiquement une base de données d'entrainement 60.

Le système 1 comporte un système radar 10' associé à un système de guerre électronique - GE 30. Le système 1 comporte également un ordinateur 50 et la base de données d'entrainement 60.

Le système radar 10' est similaire au système radar 10. Il comporte un radar 12 et un calculateur 14', ce dernier étant programmé pour comporter le module de prétraitement 22 et le module de normalisation 24, lorsqu'un tel module est mis en œuvre.

Le système radar 10' est uniquement utilisé pour produire des spectres bruts ou normalisés. Il ne comporte donc pas l'algorithme d'identification 26 du système radar 10.

Le système de GE 30 est conforme à l'état de la technique. Il est adapté pour détecter des sources RF dans l'environnement et à identifier la nature des sources RF détectées. Une source RF est par exemple un radar d'un aéronef menaçant, une antenne de radiocommunication, etc.

Le système de GE 30 associe une pluralité de capteurs 32 et un calculateur 34.

Un capteur est un capteur large bande, comme par exemple un capteur opérant de la bande L (1 GHz) à la bande Ka (40 GHz). Il peut par exemple s'agir de capteurs de mesures de soutien électronique - ESM (« Electronic Support Measures »), notamment pour capter des signaux émis par des radars - RESM « Radar Electronic Support Measures »), et/ou des systèmes de communisation - CESM (« Communication Electronic Support Measures »).

Le calculateur 34 est convenablement programmé pour comporter un module de détection 42, un module de pistage 44 et un module d'identification 46.

Le module de détection 42 vient traiter les signaux délivrés par les capteurs de manière à construire un objet synthétique. Un objet synthétique donne par exemple une liste des fréquences captées, une liste des durées d'impulsion captées, etc.

Le module de pistage 44 traite les objets synthétiques en sortie du module 42 de manière à créer des pistes, une piste correspondant au suivi d'une source RF dans le temps.

Le module d'identification 46 est adapté pour identifier une source RF à partir d'une piste en sortie du module 44.

Cette identification s'effectue par comparaison avec une bibliothèque de référence 48. La bibliothèque de référence regroupe une pluralité de types de source RF.

L'identification d'une source RF consiste de préférence à associer à une piste observée, une liste de candidats possibles. Un candidat est un type de source RF de la bibliothèque de référence dont la piste correspond avec une certaine probabilité à la piste observée.

L'ordinateur 50 est relié d'une part au calculateur 14' du système radar 10 et d'autre part au calculateur 34 du système de guerre électronique 30.

Dans le mode de réalisation de la figure 2, l'ordinateur 50 est embarqué dans l'aéronef porteur du système radar 10' et du système de guerre électronique 30. Il est par exemple connecté directement en sortie de ces systèmes.

En variante, l'ordinateur 50 est au sol et la communication avec le système radar et le système de GE s'effectue au moyen d'une liaison air adaptée, ou encore en temps différé, les informations collectées par le système radar d'une part et par le système de GE d'autre part étant traitées par l'ordinateur 50 à la fin d'une campagne de mesure.

L'ordinateur 50 du système 1 permet une labellisation automatique d'un spectre radar délivré par le système radar 10' avec l'identification délivrée par le système de GE 30 au même instant.

L'identification donnée par le système de GE 30 est donc considérée comme l'identification vraie.

L'ordinateur 50 est adapté pour stocker la donnée labellisée ainsi obtenue, dans la base de données d'entrainement 60.

Une donnée labellisée associe par conséquent :
- un spectre radar, de préférence normalisé, c'est-à-dire une entrée de l'algorithme d'IA d'identification 26;
- un label ou étiquette correspondant à l'identifiant vrai de la source RF à associer à ce spectre.

Le système 1 comporte un ordinateur 70 permettant, une fois la base 60 peuplée d'un nombre suffisant de données labellisées, d'entrainer l'algorithme d'IA d'identification 26 à partir de la base de données 60. L'ordinateur 70 et l'ordinateur 50 peuvent être un même ordinateur.

La figure 3 représente un mode de réalisation préféré d'un procédé de configuration selon l'invention.

La première phase 110 du procédé 100 consiste à peupler automatiquement la base de données d'entrainement 60 avec des données labellisées en utilisant le système 1.

Le système radar observe la même région spatiale que le système de GE, le système de GE ayant avantageusement transmis préalablement au moins une information d'azimut d'un source RF pistée au système RADAR.

Dans une étape 112, le système radar 10' acquière un spectre radar brut, d'un domaine observé par le radar 12 du système 10' à l'instant courant. Ce spectre contient un objet cible observé. Eventuellement ce spectre brut peut être immédiatement normalisé.

Simultanément, dans l'étape 114, une information de référence est obtenue au moyen du système de GE 20. L'information de référence est l'identification de source RF effectuée par le système de GE 20 à l'instant courant. Cet identifiant correspond à la détection et au pistage d'une source RF.

Il est à noter que les observations du système radar et du système de GE sont synchronisées, ou tout au moins une corrélation temporelle est établie permettant d'associer un spectre radar délivré par le système 10' et un identifiant Id délivré par le système de GE 30. Ainsi la source RF identifiée par le système de GE 30 est en relation (est embarquée à bord) de l'objet observé par le système radar 10'.

Dans ce mode de réalisation particulièrement simple, la seule synchronisation des deux systèmes (qui observent la même région de l'environnement) permet d'apparier un spectre radar et un identifiant de type de source RF.

En variante, l'objet observé par le système radar est pisté (par la mise en œuvre de moyens connus de l'homme du métier). C'est alors la corrélation de la piste donnée par le système radar avec celle donnée par le système de GE qui permet d'apparier le spectre radar et l'identifiant de type de source RF.

Enfin, le procédé 100 comporte une étape 116 consistant à associer le spectre radar, brut ou normalisé, obtenu à l'étape 112 avec l'identifiant déterminé à l'étape 114 en tant qu'identifiant vrai du spectre radar. Cette association conduit à un spectre radar labellisé.

Dans une étape 118, le spectre labellisé obtenu à l'étape 116 est enregistré dans la base de données d'entrainement 60 en tant que nouvelle donnée labellisée pour l'entrainement.

Les conditions d'acquisition du spectre peuvent être enregistrées avec le spectre labellisé. Il s'agit par exemple des informations complémentaires, comme la hauteur de l'aéronef porteur, la distance de l'objet cible, l'élévation de l'antenne (ou « tilt » en anglais) du système radar, la vitesse du porteur, etc., utilisées pour la normalisation du spectre brut lorsqu'une telle étape est mise en œuvre, à l'étape 112 ou, en variante, ultérieurement dans une approche en temps différé.

Une fois la base de données d'entrainement 60 suffisamment peuplée, les spectres radar labellisés sont utilisés, dans une phase d'apprentissage 120 du procédé 100, pour l'entrainement de l'algorithme d'IA d'identification de source RF 26.

L'entraînement proprement dit consiste à modifier progressivement les paramètres de l'algorithme 26 de manière à ce que l'identifiant estimé par cet algorithme sur un spectre radar se rapproche de l'identifiant vrai associé à ce même spectre radar dans la donnée labellisée correspondante.

Une fois convenablement entrainé l'algorithme d'intelligence artificiel d'identification est téléchargé dans le calculateur 14 d'un système radar 10 pour une phase d'utilisation 130 du procédé 100 au cours de laquelle l'algorithme 26 opère en inférence. A partir d'un spectre radar S nouvellement acquis par le système radar 10, ce dernier détermine automatiquement un identifiant Id caractérisant la source RF, que représente l'objet observé.

Les types de source RF identifiables par le système radar 10 correspondent à ceux de la bibliothèque de référence utilisée par le système de GE 30 pour labelliser les données.

Cet identifiant peut servir à choisir ou optimiser un traitement radar adapté au spectre radar pour y extraire des informations complémentaires sur l'objet correspondant à la source RF.

Dans ce qui suit un premier mode de réalisation particulier de l'algorithme d'IA d'identification 26 est présenté.

Ce mode de réalisation consiste à apprendre une fonction de similarité entre deux spectres radar.

A la suite d'une requête d'identification sur une piste, le module d'identification 46 (qui ne fait pas l'objet de la présente demande de brevet), associe à ladite piste plusieurs candidats, chaque candidat étant associé à une probabilité, qui quantifie la similarité entre les caractéristiques de la piste détectée et les caractéristiques du candidat (les caractéristiques du candidat étant fournies par la bibliothèque de référence).

Suite à la labellisation, chaque spectre radar est associé à un identifiant de source RF. Un exemple de telles associations est par exemple :
- Le spectre S1 correspond au candidat A avec la probabilité 0,9, au candidat B avec la probabilité 0,87 et au candidat C avec la probabilité 0,7 ;
- Le spectre S2 correspond au candidat B avec la probabilité 0,35 et au candidat D avec la probabilité 0,9 ; et,
- Le spectre S3 correspond au candidat E avec la probabilité 0,92, au candidat F avec la probabilité 0,8 et au candidat G avec la probabilité 0,61.

Deux spectres Sₓ et S_{y} sont considérés comme similaires s'ils respectent un critère de similarité. Celui-ci peut par exemple être défini comme : deux spectres sont considérés comme similaires lorsque le même candidat est identifié avec une forte probabilité (par exemple supérieure à un seuil de similarité prédéfini) dans les deux listes associées par le système de GE à ces deux spectres. A défaut, ces deux spectres sont considérés comme dissemblables.

Dans l'exemple précédent, les spectres S1 et S2 sont similaires car le candidat B est commun aux deux listes avec une probabilité supérieure à 0,6 (comme exemple de valeur de seuil) alors que les spectres S1 et S3 ou encore les spectres S2 et S3 sont dissemblables car ils ne possèdent pas de candidat commun.

L'objectif de l'apprentissage est alors de déterminer une fonction f : $f \left({S}_{x}\right) : {{S}_{x}}^{□} \to {y}_{x} ∈ {ℝ}^{M}$ permettant de projeter un spectre Sₓ dans un espace latent de dimension M. Par exemple M est choisi égal à 2, yₓ étant la projection du spectre Sₓ dans cet espace latent.

L'apprentissage consiste à rapprocher, dans l'espace latent, les couples de spectres qui sont similaires et à éloigner les couples de spectres dissemblables.

A l'issue de l'apprentissage, la fonction de similarité f apprise associe à deux spectres similaires deux projections proches dans l'espace latent et à deux spectres dissemblables deux projections éloignées dans l'espace latent.

Dans la phase opérationnelle, suite à l'acquisition d'un spectre, par exemple S₄, par le système radar 10, la fonction f apprise est appliquée sur ce spectre pour en déterminer la projection y₄ dans l'espace latent.

Puis, dans un voisinage de la projection y₄, on recherche des projections de spectres labellisés de la base de données 60.

Par exemple, cette recherche consiste à identifier l'ensemble des projections de spectres labellisés présents dans une hypersphère de rayon R centrée sur la projection y₄. Lorsque M est égal à 2, l'hypersphère est le disque de rayon R et de centre y₄.

Avantageusement, on se limite à un nombre maximal de projections de spectre labellisé.

Par exemple, dans le voisinage de y₄, on trouve les projections y₁ et y₂ des spectres S1 et S2.

Alors, les candidats à associer au spectre S₄ sont ceux des spectres S₁ et S₂. Par exemple, l'identifiant de S₄ est l'union des candidats d'identification de S₁ et S₂, notée S₁ ∪ S₂, soit les candidats A, B, C et D dans l'exemple précédent. Les probabilités des différents candidats associés à S₄ sont calculées à partir des probabilités des candidats associés à S₁ et des probabilités des candidats associés S₂ et, avantageusement de la distance entre y₄ et y₁, d'une part et y₄ et y₂, d'autre part.

Un second mode de réalisation possible de l'algorithme d'IA d'identification 26 repose sur une approche de classification, notamment une classification multi-étiquettes, selon laquelle une entrée peut être associée à plusieurs classes de sortie.

Dans cette approche, et afin d'être en mesure de fournir plusieurs candidats pour une piste, la fonction objective utilisée est, par exemple, l'entropie croisée binaire :
Soit $\hat{Id} ∈ {\left〚0, 1\right〛}^{J}$ , avec J le nombre de candidats, le label vrai d'un spectre S. Par exemple, si J = 3 et que les candidats 1 et 2 sont attendus avec certitude, alors $\hat{Id} = \left(1 1 0\right)$.

La fonction objective qui est minimisée lors de l'apprentissage est alors, pour un spectre radar S donné, et en notant Id = f(S, θ) ∈ [0,1]^{J}, la sortie du réseau de neurones paramétré par le paramètre θ et appliqué au spectre radar S : $L \left(Id, \hat{Id}\right) = - \frac{1}{J} {\sum }_{j = 1}^{J} \hat{{Id}_{j}} log \left({Id}_{j}\right) + \left(1-\hat{{Id}_{j}}\right) log \left(1-{Id}_{j}\right)$ où j est un entier entre 1 et J, et Idⱼ la jième coordonnée du label Id et $\hat{{Id}_{j}}$ la jième coordonnée du label vrai $\hat{Id}$.

Il est à noter qu'il est possible de conserver uniquement les candidats dont la probabilité est supérieure à un certain seuil de probabilité lors de l'apprentissage. Par exemple, seuls les candidats dont la probabilité est supérieure à 0,7 sont conservés et utilisés lors de l'apprentissage.

Lors de la phase opérationnelle, où l'algorithme d'IA est utilisé en inférence, la sortie Id ∈ [0,1]^{J} est disponible et, tout comme lors de l'apprentissage, il est possible de ne conserver que les candidats associés à une forte probabilité, c'est-à-dire supérieure à un seuil T : ${Id}_{i} = \left\{\begin{matrix}1 si {Id}_{i} \geq T \\ 0 sinon\end{matrix}\right.$

Dans une variante de réalisation, le module 46 ne met pas en œuvre un algorithme d'IA, mais une procédure fondée sur le simple calcul de probabilité.

Lors d'une campagne de mesure, chaque type de porteur est caractérisé par une pluralité de spectres radar.

L'allure des spectres radar est représentative de la nature du porteur éclairé par le radar et fournit donc une signature du porteur.

Des lots de données d'apprentissage constitués de spectres radar sont enregistrés.

Dans la pratique, le système de GE identifie une piste en lui associant une liste de plusieurs candidats.

Ainsi une liste de candidats est associée à chaque spectre : ${S}_{x} = \left\{RADAR A:P=Pa; RADAR B:P=Pb;…; RADAR n:P=Pn\right\}$

En reprenant l'exemple précédent :
S₁ = {RADAR A:p=0,9 ; RADAR B :p=0,87 ; RADAR C :p=0,7 RADAR D:p=0 ; RADAR E :p=0 ; RADAR F :p=0 ; G :p=0}
S₂ = {RADAR A:p=0 ; RADAR B :p=0,65 ; RADAR C :p=0 ; RADAR D:p=0,9 E :p=0 ; F :p=0 ; G :p=0 }
S₃={ RADAR A:p=0 ; RADAR B :p=0 ; RADAR C :p=0 ; RADAR D:p=0 ;E :p=0,92 ; F :p=0,8 ; G :p=0,61 }

Pour labelliser un spectre radar particulier, il faut identifier le meilleur candidat parmi l'ensemble des listes fournies par le système de GE.

La méthode suivante est par exemple mise en œuvre :
- Identifier quel est le candidat de la liste Li qui a la probabilité la plus forte Maxi ;
- Calculer la somme Sumi des probabilités des candidats de la liste Li ;
- Calculer le ratio Ri pour la liste Li : Ri = Maxi/Sumi ;
- Faire la moyenne des ratios Ri sur la totalité des listes pour obtenir la valeur d'un seuil de probabilité Rmoy ;
- Déterminer, pour chaque liste Li, les candidats dont la probabilité est au-dessus du seuil Rmoy, pour identifier les candidats prépondérants ;
- Comptabilise, sur l'ensemble des listes Li, combien de fois chaque candidat est ressorti ;
- Labelliser le spectre radar avec le candidat qui apparait avec le plus fréquemment.

En variante, les n candidats les plus fréquents sont associés à un spectre radar particulier.

Cette liste de candidats peut être améliorée d'une campagne de mesures à l'autre. Notamment, lorsque le candidat A est majoritaire avec une répartition différente des probabilités pour les autres candidats X, alors les probabilités deviennent : $PX = \frac{\left({x}_{1}+{x}_{2}\right)}{\sum \left({x}_{1}+{x}_{2}\right)}$

où x1 est la probabilité associée au candidat X à la suite d'une première campagne alors que le candidat A est majoritaire, et x2 est la probabilité associée au candidat X à la suite d'une seconde campagne de mesures, alors que le candidat A est encore majoritaire.

En variante, un ou plusieurs spectres radar nouvellement labellisés, sont utilisés immédiatement pour paramétrer le module d'identification 26. Cette variante est particulièrement intéressante pour permettre, suite à un premier entraînement du module 26, une mise à jour des paramètres de ce module 26 afin d'élargir ses capacités d'identification. Il s'agit donc d'un entraînement « en temps réel », par exemple au cours d'un vol opérationnel, par opposition à un entrainement « en temps différé », par exemple suite à une campagne de mesures permettant de peupler la base de données d'entraînement, puis de réaliser l'entrainement de l'algorithme d'identification, par exemple au sol sur un autre ordinateur.

Par exemple encore, ce n'est pas un spectre radar, brut ou normalisé, qui constitue l'entrée de l'algorithme d'identification, mais un ensemble de grandeurs intermédiaires extraites du spectre radar et permettant de définir une signature caractéristique du spectre radar, brut ou normalisé.

Il peut par exemple s'agir d'une grandeur statistique extraite du spectre radar, brut ou normalisé, ou encore de grandeurs minimales et maximales en amplitude et/ou fréquence du spectre.

Il peut s'agir par exemple d'associer une pluralité d'attributs au spectre par comparaison à une pluralité de spectres de référence présents dans une base de données de référence.

L'homme du métier constatera que l'invention consiste finalement à apprendre à un système radar à identifier des sources RF, en se fondant sur les résultats d'identification obtenus par un autre système, en l'occurrence un système de guerre électronique, pris en tant que référence. Ce système de référence est indépendant du système radar.

C'est donc un apprentissage supervisé avec des critères issus d'un autre système déjà entraîné. Il y a donc transfert de l'expérience acquise par le système de référence, ou système professeur, vers le système radar, ou système élève.

L'invention présente de nombreux avantages :
L'étape de normalisation et/ou d'extraction d'une signature du spectre, permet de réduire l'espace des spectres radar, ce qui facilite l'identification et l'entrainement de l'algorithme d'IA. Par conséquent, cela permet de réduire encore plus le nombre de campagnes de vol nécessaires au peuplement de la base de données d'entraînement.
L'élaboration des données labellisées s'effectue automatiquement, sans intervention humaine. Le procédé selon l'invention permet de se dispenser d'experts aptes à reconnaître la nature d'une source RF à partir de données radar.

Le domaine d'application de l'invention est celui des radars, notamment aéroportés, pour l'observation, la surveillance, etc.

Avantageusement, le système radar augmenté d'une fonctionnalité d'identification est utilisé en combinaison d'un système de GE de manière à être prêt à suppléer ce dernier en cas de dysfonctionnement. Cela permet de poursuivre la mission avec le seul système radar.

Dans ce qui suit, une manière de réaliser l'étape de normalisation est présentée.

Les amplitudes et l'étalement fréquentiel d'un spectre dépendent généralement de la hauteur H du porteur, de l'angle de site (aussi dénommé angle d'élévation) α du faisceau, et de l'ouverture Θ du faisceau.

Dans l'absolue, il faudrait enregistrer dans la base de données des spectres pour différentes configurations, c'est-à-dire plusieurs hauteurs, plusieurs angles de site et plusieurs ouvertures. Mais cette solution nécessiterait alors d'acquérir un grand nombre de spectres et, en conséquence, augmenterait le nombre nécessaire de campagnes de mesures en vol.

Il est donc préférable que l'identification se fasse sur des spectres normalisés plutôt que bruts.

Pour une ouverture antenne et un site faisceau fixés, plus la hauteur est importante, plus le spectre est étalé (à cause de l'augmentation des distances) et plus les amplitudes sont faibles.

La normalisation consiste alors à rapporter les différents spectres bruts sur les mêmes échelles en amplitudes et en fréquences. Les échelles sont par exemple celles d'un spectre de calibration.

Pour normaliser un spectre brut selon l'axe des fréquences, on compense son étalement spectrale E_{S}.

On montre que l'étalement spectrale s'écrit, en fonction de la hauteur, de l'angle de site et de l'ouverture : ${E}_{S} = 2 . K . H . \left(\frac{1}{cos \left(α+\frac{Θ}{2}\right)}-\frac{1}{cos \left(α+\frac{Θ}{2}\right)}\right)$ avec K un coefficient égale au rapport de la bande de fréquence émise sur la période de récurrence, H la hauteur, α l'angle de site et Θ l'ouverture du faisceau

La première étape consiste donc à normaliser le spectre brut selon l'axe des fréquences en appliquant un facteur d'échelle E_{S0}/E_{S}, où E_{S} est l'étalement spectrale du spectre brut et E_{S0} est l'étalement spectrale du spectre de calibration.

La seconde étape consiste à ajuster les amplitudes du spectre brut selon l'axe des amplitudes en appliquant un facteur d'échelle $\frac{A 0}{A}$, où A est l'amplitude maximale du spectre brut et A0 l'amplitude maximale du spectre de calibration.

Dans une troisième étape, le spectre normalisé est obtenu en prenant un échantillon sur R, avec $R = \frac{{D}_{□}}{{D}_{0}}$, où D est la fréquence maximale du spectre brut et D0 la fréquence maximale du spectre de calibration.

## Revendications

1. Procédé (100), mis en œuvre par ordinateur, **caractérisé en ce qu'**il comporte :
- une phase (110) de peuplement d'une base de données d'entrainement (60) en labellisant automatiquement un spectre radar obtenu au moyen d'un système radar (10') avec un identifiant vrai de type de source RF obtenu au moyen d'un système de guerre électronique (30), ledit système de guerre électronique s'appuyant sur une bibliothèque de référence de guerre électronique ;
- une phase d'entraînement (120) consistant à entrainer et/ou valider, en utilisant des lots de données labellisées de la base de données d'entrainement, un algorithme d'identification de manière à obtenir un algorithme d'identification entrainé ; et,
- une phase opérationnelle (130) dans laquelle l'algorithme d'identification entrainé est utilisé en inférence afin d'associer à un spectre radar d'observation d'un objet cible présent dans un environnement, un identifiant de type de source RF,
la phase de peuplement consistant à :
- acquérir (110) un spectre radar au moyen d'un système radar (10') ;
- obtenir, au moyen d'un système de guerre électronique (30), un identifiant de type de source RF pour une source RF détectée et pistée par le système de guerre électronique au moment de l'acquisition du spectre radar ; et,
- associer (150), dans une donnée labellisée, le spectre radar et l'identifiant de type de source RF délivré par le système de guerre électronique en tant qu'identifiant vrai de type de source RF dudit spectre radar.

2. Procédé selon la revendication 1, dans lequel un spectre radar étant un spectre radar brut (S), le procédé comporte, en outre, une étape de normalisation permettant, à partir du spectre radar brut, d'obtenir un spectre radar normalisé (S'), ledit spectre normalisé étant une entrée de l'algorithme d'identification.

3. Procédé selon l'une quelconque des revendications 1 à 2, dans lequel le procédé comporte une étape de prétraitement comportant une étape d'extraction d'une ou plusieurs grandeurs(s) intermédiaire(s) du spectre radar de manière à définir une signature caractéristique du spectre radar, ladite signature caractéristique étant une entrée de l'algorithme d'identification.

4. Programme d'ordinateur comportant des instructions logicielles qui, lorsqu'elles sont exécutées par un ordinateur permettent la mise en œuvre d'un procédé selon l'une quelconque des revendications 1 à 3.

## Patentansprüche

1. Verfahren (100), implementiert durch Computer, **dadurch gekennzeichnet, dass** es Folgendes umfasst:
- eine Phase (110) eines Füllens einer Trainingsdatenbank (60) durch automatisches Labeln eines mittels eines Radarsystems (10') erlangten Radarspektrums mit einem mittels eines Systems der elektronischen Kriegsführung (30) erlangten wahren Identifikator eines Typs einer HF-Quelle, wobei das System elektronischer Kriegsführung auf einer Referenzbibliothek für elektronische Kriegsführung basiert;
- eine Trainingsphase (120), die darin besteht, unter Verwendung von gelabelten Datenstapeln aus der Trainingsdatenbank einen Identifizierungsalgorithmus zu trainieren und/oder zu validieren, um einen trainierten Identifizierungsalgorithmus zu erlangen; und,
- eine Betriebsphase (130), in der der trainierte Identifizierungsalgorithmus in Inferenz verwendet wird, um einen Identifikator für den Typ der HF-Quelle mit einem Radarspektrum zur Beobachtung eines Zielobjekts, das in einer Umgebung vorhanden ist, zu assoziieren,
wobei die Füllphase aus Folgendem besteht:
- Erfassen (110) eines Radarspektrums mittels eines Radarsystems (10');
- Erlangen, mittels eines Systems elektronischer Kriegsführung (30), eines Identifikators eines Typs einer HF-Quelle, die von dem System elektronischer Kriegsführung zum Zeitpunkt der Erfassung des Radarspektrums erfasst und verfolgt wird; und
- Assoziieren (150), in gelabelten Daten, des Radarspektrums und des Identifikators eines Typs einer HF-Quelle, die von dem System elektronischer Kriegsführung als wahren Identifikator eines Typs einer HF-Quelle des Radarspektrums ausgegeben wird.

2. Verfahren nach Anspruch 1, wobei ein Radarspektrum ein rohes Radarspektrum (S) ist, das Verfahren ferner einen Normalisierungsschritt umfasst, der es ermöglicht, anhand des rohen Radarspektrums ein normalisiertes Radarspektrum (S') zu erlangen, wobei das normalisierte Spektrum ein Eingang für den Identifizierungsalgorithmus ist.

3. Verfahren nach einem der Ansprüche 1 bis 2, wobei das Verfahren einen Vorverarbeitungsschritt umfasst, umfassend einen Schritt eines Extrahierens einer oder mehrerer Zwischengrößen aus dem Radarspektrum, um eine charakteristische Signatur des Radarspektrums zu definieren, wobei die charakteristische Signatur ein Eingang für den Identifizierungsalgorithmus ist.

4. Computerprogrammprodukt, umfassend Softwareanweisungen, die, wenn sie von einem Computer ausgeführt werden, die Durchführung eines Verfahrens nach einem der Ansprüche 1 bis 3 ermöglichen.

## Claims

1. A computer-implemented method (100), **characterized in that** it includes:
- a phase (110) of populating a training database (60) by automatically labeling a radar spectrum obtained by means of a radar system (10') with a true identifier of type of RF source obtained by means of an electronic warfare system (30), said electronic warfare system relying on an electronic warfare reference library;
- a training phase (120) consisting in training and/or validating, using batches of labeled data from the training database, an identification algorithm so as to obtain a trained identification algorithm; and,
- an operational phase (130) wherein the trained identification algorithm is used under inference in order to associate an identifier of type of RF source with an observed radar spectrum of a target object present in an environment,
the phase of populating comprising:
- acquiring (110) a radar spectrum by means of a radar system (10');
- obtaining, using an electronic warfare system (30), an identifier of type of RF source for an RF source detected and tracked by the electronic warfare system at the time of the acquisition of the radar spectrum; and,
- associating (150), in a labeled data, the radar spectrum and the identifier of type of RF source issued by the electronic warfare system as the true identifier of type of RF source of said radar spectrum.

2. The method according to claim 1, wherein a radar spectrum is a raw radar spectrum (S), the method further includes a normalization step serving for obtaining, from the raw radar spectrum, a normalized radar spectrum (S'), said normalized spectrum being an input to the identification algorithm.

3. The method according to any one of claims 1 to 2, wherein the method includes a preprocessing step including a step of extraction of one or a plurality of intermediate quantities of the radar spectrum so as to define a characteristic signature of the radar spectrum, said characteristic signature being an input to the identification algorithm.

4. A computer program including software instructions which, when executed by a computer, are used to implement a method according to any one of the claims 1 to 3.
